# EUROPÄISCHE PATENTSCHRIFT

(11) **EP 2 892 762 B1**
(45) Veröffentlichungstag und Bekanntmachung des Hinweises auf die Patenterteilung: **28.06.2017**
(21) Anmeldenummer: 13750723.2
(22) Anmeldetag: 22.08.2013
(51) Int. Cl.: B60R 21/217, B60R 21/205, B60R 21/00

(54) **KRAFTFAHRZEUG MIT EINEM AIRBAGMODUL**
MOTOR VEHICLE WITH AN AIRBAG MODULE
VEHICULE AUTOMOBILE AVEC UN MODULE D'AIRBAG

(30) Priorität: 06.09.2012 DE 102012215840
(43) Veröffentlichungstag der Anmeldung: 15.07.2015
(73) Patentinhaber: Bayerische Motoren Werke Aktiengesellschaft, 80809 München (DE)
(72) Erfinder: GELTINGER, Andreas, 84163 Marklkofen (DE); HATTENSPERGER, Michael, 84416 Inning am Holz (DE); MAURER, Christian, 85659 Karlsdorf/Forstern (DE); SCHREFF, Reinhold, 84103 Postau (DE)
(86) Internationale Anmeldenummer: PCT/EP2013/067432
(87) Internationale Veröffentlichungsnummer: WO 2014/037225

(56) Entgegenhaltungen:
- EP-A1- 0 738 630
- EP-A1- 1 405 774
- DE-A1- 10 203 286
- DE-A1- 10 346 012
- FR-A1- 2 696 392

## Beschreibung

Die Erfindung betrifft ein Kraftfahrzeug mit einem Airbagmodul nach dem Oberbegriff des Patentanspruchs 1.

Aus der EP 0 738 630 A1 ist bereits ein Kraftfahrzeug mit einem Airbagmodul bekannt, gemäß dem Oberbegriff des Patentanspruchs1, das wenigstens einen Airbag und wenigstens einen Gasgenerator aufweist, die in einem Airbaggehäuse aufgenommen sind, wobei das Airbagmodul mit dem Airbaggehäuse an einem Befestigungsrahmen befestigbar ist, der mit einem Wandungsabschnitt der Armaturentafel verbunden ist. Das Airbaggehäuse ist zur Montage auf den Wandungsabschnitt aufsetzbar und in eine Halteposition längsverschiebbar, in der das Airbaggehäuse formschlüssig vom Befestigungsrahmen gehalten ist.

Ferner ist aus der DE 103 46 012 A1 bereits ein Kraftfahrzeug mit einem Airbagmodul bekannt, das wenigstens einen Airbag und wenigstens einen Gasgenerator aufweist, die in einem Airbaggehäuse aufgenommen sind. Das Airbaggehäuse ist mittels wenigstens einer Befestigungseinrichtung an wenigstens einem angrenzenden Wandungsabschnitt lösbar befestigbar, wobei die Befestigungseinrichtung als Steck- und Schiebeverbindung nach dem Schlüssellochprinzip ausgebildet ist.

Aufgabe der Erfindung ist es, ein Kraftfahrzeug mit einem Airbagmodul zu schaffen, das auf einfache Weise an einem angrenzenden Wandungsabschnitt befestigbar ist. Diese Aufgabe wird mit einem Kraftfahrzeug mit einem Airbagmodul mit den Merkmalen des Patentanspruchs 1 gelöst.

Erfindungsgemäß umfasst ein Airbagmodul eines Kraftfahrzeugs wenigstens einen Airbag und wenigstens einen Gasgenerator, die in einem Airbaggehäuse aufgenommen sind. Dieses Airbagmodul ist mit dem Airbaggehäuse an einem Befestigungsrahmen befestigbar, der mit einem Wandungsabschnitt einer Armaturentafel des Kraftfahrzeugs verbunden ist. Zur Montage wird das Airbaggehäuse auf den Wandungsabschnitt aufgesetzt und in eine Halteposition längsverschoben, in der das Airbaggehäuse formschlüssig vom Befestigungsrahmen gehalten ist. Das Airbaggehäuse verrastet beim Längsverschieben des Airbagmoduls in die Halteposition am Befestigungsrahmen, sodass das Airbaggehäuse gegen ein Längsverschieben aus der Halteposition heraus gesichert ist. Dies ist eine besonders einfache Methode, wie das Airbagmodul sicher in seiner Halteposition gehalten werden kann. Die Montage erfolgt außerordentlich prozesssicher und schnell, es sind keine zusätzlichen Hilfsmittel erforderlich. Die Befestigung des Airbagmoduls über einen Formschluss, in den das Modul hineingeschoben wird, und das anschließende Sichern der Halteposition, beispielsweise über einen Clip, stellt somit eine außerordentlich kostengünstige und schnelle Art der Befestigung dar.

Für den Formschluss zwischen dem Airbaggehäuse und dem Befestigungsrahmen weist das Airbaggehäuse an zumindest zwei gegenüberliegenden Seiten mehrere seitlich nach außen abstehende Zungen auf. Dabei sind die an einer Seite nebeneinander angeordneten Zungen jeweils mindestens eine Zungenbreite zueinander beabstandet. Der Befestigungsrahmen weist für die Zungen des Airbaggehäuses entsprechende Halteelemente auf, sodass das befestigte Airbagmodul formschlüssig mit den Zungen durch die Halteelemente gehalten ist. Das Airbaggehäuse ist zur Befestigung am Befestigungsrahmen in Längsrichtung der beiden einander gegenüberliegenden Seiten mit den Zungen in die Halteelemente einschiebbar.

Bevorzugt weist das Airbaggehäuse in Längsverschieberichtung gesehen zumindest am vorderen Randbereich und / oder am hinteren Randbereich zumindest einen Clip zum Verrasten auf. Der Clip kann günstiger Weise als klassische Rastzunge mit einer Rastnase ausgestaltet sein, die beim Schieben des Airbaggehäuses zunächst elastisch verformt wird, bis die Rastnase in einer Ausnehmung oder Vertiefung verrastet.

Idealerweise ist der zumindest eine Clip einteilig mit dem Airbaggehäuse ausgeführt. Dies ist eine besonders einfache und damit kostengünstige Art, den zumindest einen Clip am Airbaggehäuse anzubringen. Dazu kann beispielsweise das Airbaggehäuse aus einem Glasfaser- oder Glaskugel-verstärkten Kunststoff bestehen. An ein solches Airbaggehäuse aus einem Kunststoff lässt sich durch eine entsprechende Gestaltung des Werkzeugs besonders leicht der zumindest eine Clip direkt mit anformen.

Weitere vorteilhafte Ausgestaltungen sind Gegenstand von Unteransprüchen.

In der Zeichnung ist ein Ausführungsbeispiel der Erfindung dargestellt, anhand dessen die Erfindung im Folgenden näher beschrieben wird. Die einzelnen Figuren zeigen in schematischer Darstellungsweise
- Fig. 1: ein Airbagmodul eines Kraftfahrzeugs, das auf einen Befestigungsrahmen aufgesetzt wird, und
- Fig. 2: das in Fig. 1 gezeigte Airbagmodul nach dem Aufsetzen auf den Befestigungsrahmen inklusive einer vergrößerten Detailansicht des Airbagmoduls in der Halteposition.

In den beiden Figuren ist ein Airbagmodul 1 dargestellt, das aus einem Airbaggehäuse 2 besteht, in dem zumindest ein Airbag und wenigstens ein Gasgenerator untergebracht sind. Der Airbag dient als Beifahrerairbag, der in einer Armaturentafel auf der Beifahrerseite untergebracht ist. Im Falle eines Unfalls kann der Airbag durch einen dem Beifahrer zugewandten Wandungsabschnitt 3 der Armaturentafel hindurchtreten und sich vor dem Beifahrer entfalten. Das Airbagmodul 1 ist über das Airbaggehäuse 2 in der Armaturentafel an dem dem Beifahrer zugewandten Wandungsabschnitt 3 angebracht. Die beim Auslösen des Airbags wirkenden Kräfte sind ziemlich hoch. Entsprechend hoch ist auch die Belastung, die auf die Verbindung zwischen dem Airbaggehäuse 2 und dem Wandungsabschnitt 3 der Armaturentafel wirken.

Das Airbaggehäuse 2 ist ein Kunststoffspritzgussteil aus einem mit Glasfasern und / oder mit Glaskugeln verstärkten Kunststoff. Es weist eine längliche Form mit zwei zueinander parallel verlaufenden Längsseiten 4 auf. Von diesen einander gegenüberliegenden Längsseiten 4 stehen jeweils mehrere Zungen 5 seitlich nach außen ab. Jede Längsseite 4 weist entlang seiner Längserstreckung mehrere, in gleichmäßigen Abständen zueinander angeordnete, jeweils gleich breite Zungen 5 auf. Dabei ist der Abstand d zwischen zwei Zungen 5 größer als die Breite b der Zungen 5. Alle Zungen 5 des Airbaggehäuses 2 liegen in einer Ebene. Die Zungen 5 sind einteilig mit dem eigentlichen Airbaggehäuse 2 ausgeführt. Sie sind mit zusätzlichen Verrippungen versteift. An den beiden Schmalseiten 10 des Airbaggehäuses 2 sind zudem jeweils zwei in der Ebene der Zungen 5 nach außen abstehende Clipse in Form von Rastzungen 11 mit jeweils einer Rastnase angeordnet. Die Rastzungen 11 mit den Rastnasen sind einteilig an das Airbaggehäuse 2 angespritzt.

Zur Aufnahme des Airbaggehäuses 2 ist auf der Innenseite des Wandungsabschnitts 3 ein Befestigungsrahmen 6 angespritzt. Die Passagiere sehen vom Fahrzeuginnenraum aus stets nur die Außenseite des Wandungsabschnitts 3. Der Befestigungsrahmen 6 erstreckt sich ebenfalls in einer Ebene. Er dient sowohl zur Befestigung des Airbaggehäuses 2 als auch zur Erhöhung der Steifigkeit des Wandungsabschnitts 3 der Armaturentafel im Bereich des Beifahrerairbags. Der Befestigungsrahmen 6 besteht aus zwei einander gegenüberliegenden Seitenrändern 7, die stegartig abstehen, und deren Enden jeweils mit einem Querabschnitt 8 miteinander verbunden sind. Von diesen abstehenden Seitenrändern 7 wiederum stehen in regelmäßigen Abständen Haltestege 9 als Halteelemente ab, die sich in der Ebene des Befestigungsrahmens 6 erstrecken, und die zum gegenüberliegenden Seitenrand 7 hin ragen. Der Abstand zwischen dem Wandungsabschnitt 3 und den Haltestegen 9 entspricht der Dicke der Zungen 5. Der Abstand zwischen den aneinander angrenzenden Haltestegen 9 an den Seitenrändern 7 ist größer als die Breite b der Zungen 5. Sowohl die Seitenränder 7 als auch der zumindest eine Querabschnitt 8 wie auch die Haltestege 9 sind jeweils mit zusätzlichen, einteilig angespritzten Verrippungen versteift. Die beiden Querabschnitte 8 des Befestigungsrahmens 6 weisen jeweils zwei Ausnehmungen 13 auf.

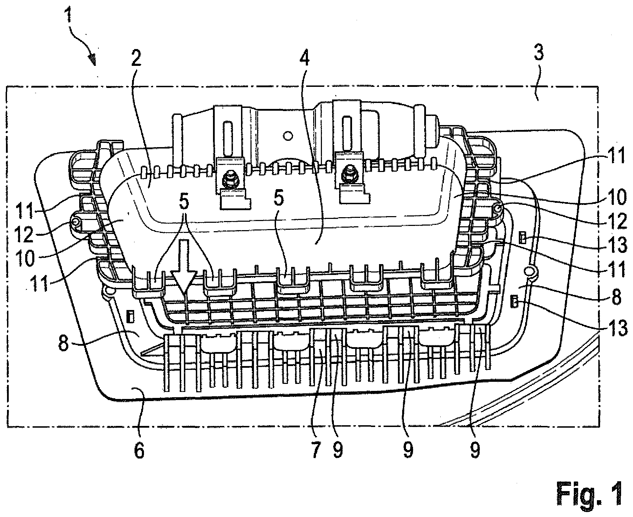

Der Befestigungsrahmen ist auf das Airbaggehäuse 2 genau abgestimmt. Zur Montage kann - wie in Fig. 1 gezeigt - das Airbaggehäuse 2 auf den Wandungsabschnitt 3 der Armaturentafel so aufgesetzt werden, dass die Zungen 5 der Längsränder 4 des Airbaggehäuses 2 jeweils genau zwischen den Haltestegen 9 der Seitenränder 7 des Befestigungsrahmens am Wandungsabschnitt 3 der Armaturentafel zum Liegen kommen. Der Abstand zwischen den nach innen ragenden Haltestegen 9 ist zu klein für das Airbaggehäuse 2, hier könnte das Airbaggehäuse 2 nicht auf den Wandungsabschnitt 3 aufgesetzt werden.

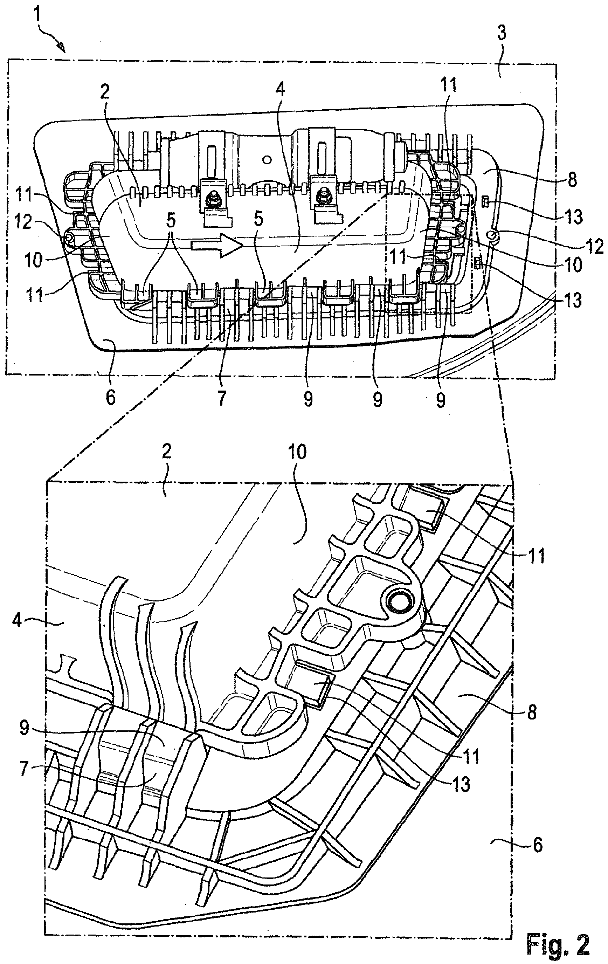

Zur sicheren Befestigung des Airbaggehäuses 2 wird dieses nun aus der in Fig. 1 gezeigten, auf den Wandungsabschnitt 3 aufgesetzten Stellung in Längsrichtung des Airbaggehäuses 2 etwa um die Breite b einer Zunge 5 verschoben. Dabei schieben sich die Zungen 5 unter die Haltestege 9 der Seitenränder 7 hinein, wie es in der vergrößerten Detailansicht der Fig. 2 gezeigt ist. In dieser Halteposition ist das Airbaggehäuse 2 formschlüssig über die Zungen 5 zwischen den Haltestegen 9 und dem Wandungsabschnitt 3 der Armaturentafel gehalten. Beim Verschieben des Airbaggehäuses 2 werden die Rastzungen 11 mit den Rastnasen elastisch durch den Befestigungsrahmen 3 vom Wandungsabschnitt 3 weg gedrückt. Beim Erreichen der Halteposition werden die Rastnasen durch die elastisch vorgespannten Rastzungen 11 automatisch in die Ausnehmungen 13 im Befestigungsrahmen 6 gedrückt und verrasten dort. Damit ist das Airbaggehäuse 2 sicher in der Halteposition gehalten, es kann nicht mehr während der Fahrt des Kraftfahrzeugs unerwünschter Weise durch Erschütterungen relativ zu dem Befestigungsrahmen 6 verschieben. Zusätzlich kann das Airbaggehäuse 2 nach dem Einschieben in die Halteposition noch beidseitig mit jeweils zumindest einer Schraube mit dem Befestigungsrahmen 6 verschraubt werden. Dazu weisen das Airbaggehäuse 2 und der Befestigungsrahmen 6 beidseitig jeweils entsprechende Schraubdome 12 auf.

Dies stellt eine sehr einfache und robuste Methode zur Befestigung eines Airbagmoduls 1 an einem Wandungsabschnitt 3 dar.

## Patentansprüche

1. Kraftfahrzeug mit einem Airbagmodul (1), das wenigstens einen Airbag und wenigstens einen Gasgenerator aufweist, die in einem Airbaggehäuse (2) aufgenommen sind, wobei das Airbagmodul (1) mit dem Airbaggehäuse (2) an einem Befestigungsrahmen (6) befestigbar ist, der mit einem Wandungsabschnitt (3) der Armaturentafel verbunden ist, wobei das Airbaggehäuse (2) zur Montage auf den Wandungsabschnitt (3) aufsetzbar und in eine Halteposition längsverschiebbar ist, in der das Airbaggehäuse (2) formschlüssig vom Befestigungsrahmen (6) gehalten ist, wobei das Airbaggehäuse (2) und / oder der Befestigungsrahmen (3) so gestaltet sind, dass das Airbaggehäuse (2) beim Längsverschieben des Airbagmoduls (1) in die Halteposition am Befestigungsrahmen (6) verrastet, sodass das Airbaggehäuse (2) gegen ein Längsverschieben aus der Halteposition heraus gesichert ist, wobei das Airbaggehäuse (2) an zumindest zwei gegenüberliegenden Seiten (4) mehrere seitlich nach außen abstehende Zungen (5) aufweist, wobei die an einer Seite (4) nebeneinander angeordneten Zungen (5) jeweils mindestens eine Zungenbreite (b) zueinander beabstandet sind, und dass der Befestigungsrahmen (6) für die Zungen (5) des Airbaggehäuses (2) entsprechende Halteelemente aufweist, sodass das befestigte Airbagmodul (1) formschlüssig mit den Zungen (5) durch die Halteelemente gehalten ist, **dadurch gekennzeichnet, dass** das Airbaggehäuse (2) ein Kunststoffspritzgussteil aus einem mit Glasfasern oder Glaskugeln verstärkten Kunststoff ist, wobei die Zungen (5) einteilig mit dem eigentlichen Airbaggehäuse (2) ausgeführt sind und mit zusätzlichen Verrippungen versteift sind.

2. Kraftfahrzeug nach Anspruch 1, **dadurch gekennzeichnet, dass** in Längsverschieberichtung gesehen zumindest am vorderen Randbereich und / oder am hinteren Randbereich des Airbaggehäuses (2) zumindest ein Clip (11) zum Verrasten angebracht ist.

3. Kraftfahrzeug nach Anspruch 1 oder 2, **dadurch gekennzeichnet, dass** der zumindest eine Clip (11) einteilig mit dem Airbaggehäuse (2) ausgeführt ist.

4. Kraftfahrzeug nach einem der vorhergehenden Ansprüche, **dadurch gekennzeichnet, dass** das Airbaggehäuse (2) zur Befestigung am Befestigungsrahmen (6) in Längsrichtung der beiden einander gegenüberliegenden Seiten (4) mit den Zungen (5) in die Halteelemente einschiebbar ist.

5. Kraftfahrzeug nach Anspruch 4, **dadurch gekennzeichnet, dass** der Befestigungsrahmen (6) zumindest zwei einander gegenüberliegende Seitenränder (7) aufweist, die stegartig vom Wandungsabschnitt (3) senkrecht zur Ebene des Befestigungsrahmens (6) abstehen.

6. Kraftfahrzeug nach Anspruch 5, **dadurch gekennzeichnet, dass** von den abstehenden Seitenrändern (7) in regelmäßigen Abständen Haltestege (9) zum gegenüberliegenden Seitenrand (7) hin abstehen, die sich in der Ebene des Befestigungsrahmens (6) als Halteelemente erstrecken.

7. Kraftfahrzeug nach Anspruch 6, **dadurch gekennzeichnet, dass** der Abstand zwischen dem Wandungsabschnitt (3) und den Haltestegen (9) der Dicke der Zungen (5) entspricht.

8. Kraftfahrzeug nach Anspruch 6 oder 7, **dadurch gekennzeichnet, dass** der Abstand zwischen den aneinander angrenzenden Haltestegen (9) an den Seitenrändern (7) größer als die Breite der Zungen (5) ist.

9. Kraftfahrzeug nach einem der vorhergehenden Ansprüche, **dadurch gekennzeichnet, dass** das am Befestigungsrahmen (6) formschlüssig befestigte Airbaggehäuse (2) zusätzlich mit zumindest einer Schraube mit dem Befestigungsrahmen (6) verschraubbar ist.

## Claims

1. A motor vehicle with an airbag module (1) which has at least one airbag and at least one gas generator which are accommodated in an airbag housing (2), wherein the airbag module (1) with the airbag housing (2) can be fastened to a fastening frame (6) which is connected to a wall portion (3) of the dashboard, wherein the airbag housing (2) for mounting can be placed on the wall portion (3) and can be longitudinally displaced into a holding position in which the airbag housing (2) is held in positive manner by the fastening frame (6), wherein the airbag housing (2) and/or the fastening frame (3) are configured such that the airbag housing (2) upon the longitudinal displacement of the airbag module (1) into the holding position latches on the fastening frame (6), so that the airbag housing (2) is secured against longitudinal displacement out of the holding position, wherein the airbag housing (2) on at least two opposing sides (4) has a plurality of tongues (5) protruding laterally outwards, wherein the tongues (5) arranged on one side (4) next to one another are in each case spaced apart from each other by at least one tongue width (b), and that the fastening frame (6) has corresponding holding elements for the tongues (5) of the airbag housing (2), so that the fastened airbag module (1) is held in positive manner with the tongues (5) by the holding elements, **characterised in that** the airbag housing (2) is an injection-moulded plastics material part made from a plastics material reinforced with glass fibres or glass spheres, the tongues (5) being embodied in one part with the airbag housing (2) proper and being reinforced with additional ribbing.

2. A motor vehicle according to Claim 1, **characterised in that**, viewed in the direction of longitudinal displacement, at least one clip (11) for latching is attached at least on the front edge region and/or on the rear edge region of the airbag housing (2).

3. A motor vehicle according to Claim 1 or Claim 2, **characterised in that** the at least one clip (11) is embodied in one part with the airbag housing (2).

4. A motor vehicle according to one of the preceding claims, **characterised in that** the airbag housing (2) can be inserted into the holding elements with the tongues (5) in the longitudinal direction of the two opposing sides (4) in order to fasten it to the fastening frame (6).

5. A motor vehicle according to Claim 4, **characterised in that** the fastening frame (6) has at least two opposing lateral edges (7) which protrude in web-like manner from the wall portion (3) perpendicularly to the plane of the fastening frame (6).

6. A motor vehicle according to Claim 5, **characterised in that** holding webs (9) protrude from the protruding lateral edges (7) towards the opposing lateral edge (7) at regular distances, which webs extend as holding elements in the plane of the fastening frame (6).

7. A motor vehicle according to Claim 6, **characterised in that** the distance between the wall portion (3) and the holding webs (9) corresponds to the thickness of the tongues (5).

8. A motor vehicle according to Claim 6 or Claim 7, **characterised in that** the distance between the adjoining holding webs (9) at the lateral edges (7) is greater than the width of the tongues (5).

9. A motor vehicle according to one of the preceding claims, **characterised in that** the airbag housing (2) which is fastened in positive manner to the fastening frame (6) can additionally be screwed to the fastening frame (6) by at least one screw.

## Revendications

1. Véhicule automobile équipé d'un module d'airbag (1) qui comprend au moins un airbag et au moins un générateur de gaz qui sont logés dans un boîtier d'airbag (2), le module d'airbag (1) pouvant être fixé avec le boîtier d'airbag (2) sur un cadre de fixation (6) qui est relié à un segment de paroi (3) du tableau de bord, pour permettre son montage le boîtier d'airbag (2) pouvant être positionné sur le segment de paroi (3) et glissé longitudinalement dans une position de retenue dans laquelle le boîtier d'airbag (2) est retenu par le cadre de fixation (6) par une liaison par la forme, le boîtier d'airbag (2) et/ou le cadre de fixation (3) étant réalisé(s) de sorte que lors du coulissement longitudinal du module d'airbag (1), le boîtier d'airbag (2) s'enclenche dans la position de retenue sur le cadre de fixation (6) afin que le boîtier d'airbag (2) soit bloqué pour empêcher son extraction de la position de retenue, par coulissement longitudinal, le boîtier d'airbag (2) comprenant, sur au moins deux côtés opposés (4) plusieurs languettes (5) s'écartant latéralement vers l'extérieur, les languettes (5) voisines sur un côté (4) étant respectivement distantes les unes des autres d'au moins la largeur (b) d'une languette, et le cadre de fixation (6) comprenant, des éléments de retenue correspondants aux languettes (5) du boîtier d'airbag (2) de sorte que le module d'airbag (1) fixé soit maintenu par une liaison par la forme avec les languettes (5) par les éléments de retenue,
**caractérisé en ce que**
le boîtier d'airbag (2) est une pièce moulée par injection en un matériau synthétique renforcé par des fibres de verre ou des billes de verre, les languettes (5) étant réalisées en une seule pièce avec le boîtier d'airbag (2) et renforcées par des nervures supplémentaires.

2. Véhicule automobile conforme à la revendication 1,
**caractérisé en ce que**
dans la direction de coulissement longitudinal, au moins dans la zone de bord avant et/ou sur la zone de bord arrière du boîtier d'airbag (2) il est prévu au moins un clip (11) pour permettre l'enclenchement.

3. Véhicule automobile conforme à la revendication 1 ou 2,
**caractérisé en ce que**
le clip (11) est réalisé en une seule pièce avec le boîtier d'airbag (2).

4. Véhicule automobile conforme à l'une des revendications précédentes,
**caractérisé en ce que**
pour permettre sa fixation sur le cadre de fixation (6), le boîtier d'airbag (2) peut être glissé dans les éléments de retenue dans la direction longitudinale des deux côtés opposés (4) équipés des languettes (5).

5. Véhicule automobile conforme à la revendication 4,
**caractérisé en ce que**
le cadre de fixation (6) comprend au moins deux bords latéraux opposés (7) qui s'écartent en forme de traverses du segment de paroi (3) perpendiculairement au plan du cadre de fixation (6).

6. Véhicule automobile conforme à la revendication 5,
**caractérisé en ce qu'**
à partir des bords latéraux (7) qui s'écartent, et à des distances régulières, s'écartent vers les bords latéraux (7) opposés, des traverses de retenue (9) qui s'étendent en tant qu'éléments de retenue dans le plan du cadre de fixation (6).

7. Véhicule automobile conforme à la revendication 6,
**caractérisé en ce que**
la distance entre le segment de paroi (3) et les traverses de retenue (9) correspond à l'épaisseur des languettes (5).

8. Véhicule automobile conforme à la revendication 6 ou 7,
**caractérisé en ce que**
la distance entre les traverses de retenue (9) voisines sur les bords latéraux (7) est supérieure à la largeur des languettes (5).

9. Véhicule automobile conforme à l'une des revendications précédentes,
**caractérisé en ce que**
le boîtier d'airbag (2) fixé par une liaison par la forme sur le cadre de fixation (6) peut en outre être fixé sur ce cadre de fixation (6) au moyen d'au moins une vis.
